# EUROPEAN PATENT APPLICATION

(11) **EP 4 756 913 A1**
(43) Date of publication of application: **10.06.2026**
(21) Application number: 25848755.2
(22) Date of filing: 14.07.2025
(51) Int. Cl.: H01M 4/36, H01M 4/13, H01M 4/139, H01M 10/0562, H01M 10/052, H01M 10/0585, H01M 4/02

(54) **CATHODE ACTIVE MATERIAL FOR ALL-SOLID-STATE BATTERY, MANUFACTURING METHOD THEREFOR, AND CATHODE AND ALL-SOLID-STATE BATTERY COMPRISING SAME**

(30) Priority: 01.08.2024 KR 20240102368
(71) Applicant: LG Energy Solution, Ltd., Seoul 07335 (KR)
(72) Inventor: KANG, Sora, Daejeon 34122 (KR); KIM, Myeongsoo, Daejeon 34122 (KR); SONG, Min Sang, Daejeon 34122 (KR); KWON, Hyejin, Daejeon 34122 (KR); LEE, Choonghyeon, Daejeon 34122 (KR); CHOI, Seokin, Daejeon 34122 (KR); OH, Kyungbae, Daejeon 34122 (KR); PARK, Mihui, Daejeon 34122 (KR); LEE, Junho, Daejeon 34122 (KR)
(74) Representative: Goddar, Heinz J.
(86) International application number: PCT/KR2025/010244
(87) International publication number: WO 2026/029430

(57) **Abstract**

The present invention relates to a positive electrode active material for an all-solid-state battery, a manufacturing method thereof, a positive electrode for an all-solid-state battery comprising the same, and an all-solid-state battery.

## Description

### [TECHNICAL FIELD]

The present application claims the benefit of priority based on Korean Patent Application No. 10-2024-0102368 filed on August 1, 2024, the disclosure of which are incorporated herein by reference in their entirety.

The present invention relates to a positive electrode active material for an all-solid-state battery, a manufacturing method thereof, a positive electrode for an all-solid-state battery comprising the same, and an all-solid-state battery.

### [BACKGROUND ART]

Various batteries that may overcome the limitations of current lithium secondary batteries are being researched from the viewpoints of capacity, safety, output, upsizing, and miniaturization of batteries.

Representatively, metal-air batteries having very large theoretical capacity in terms of capacity compared to lithium secondary batteries, all-solid-state batteries having no explosion risk in terms of safety, supercapacitors in terms of output, NaS batteries or RFB (redox flow battery) in terms of upsizing, and thin film batteries in terms of miniaturization are being continuously researched in academia and industry.

Among various next-generation batteries, an all-solid-state battery means a battery in which liquid electrolyte used in existing lithium secondary batteries is replaced with solid electrolyte, and since flammable solvents are not used in the battery, ignition or explosion due to decomposition reaction of conventional electrolyte solution does not occur at all, so safety may be greatly improved. Additionally, among all-solid-state batteries, technology development for sulfide-based all-solid-state batteries that have high ionic conductivity of solid electrolyte and may theoretically implement high energy density of 900 Wh/L or more is continuing. At this time, a sulfide-based all-solid-state battery means an all-solid-state battery comprising a sulfide-based solid electrolyte.

In an all-solid-state battery system, lithium ion conduction by liquid electrolyte included in existing lithium-ion batteries (LIB, Lithium-ion battery) is not achieved. Therefore, when manufacturing a positive electrode for a sulfide-based all-solid-state battery, sulfide-based solid electrolyte particles must be added inside the positive electrode to increase the contact interface between the positive electrode active material and the sulfide-based solid electrolyte particles to increase the conduction of lithium ions. Additionally, for energy density improvement, physical contact between the positive electrode active material, sulfide-based solid electrolyte particles, and other battery elements in the positive electrode must be enhanced, and the porosity of the positive electrode after rolling must be reduced, and this must be maintained even during charging and discharging.

However, in a positive electrode for a sulfide-based all-solid-state battery, due to the energy level difference between the positive electrode active material and the sulfide-based solid electrolyte particles, chemical reaction may occur even with only physical contact between them. Additionally, there are problems such as side reactions occurring at the interface between the positive electrode active material and the sulfide-based solid electrolyte particles, so that active lithium is consumed and resistance increases.

Therefore, the necessity for technology development that may prevent side reactions caused by physical contact between the positive electrode active material and sulfide-based solid electrolyte particles in the positive electrode of a sulfide-based all-solid-state battery has been continuously raised.

### [Prior Art Documents]

### [Patent Documents]

Korean Patent Publication No. 10-2017-0070239

### [SUMMARY OF THE INVENTION]

### [TECHNICAL PROBLEM]

In order to solve the above problems, the present inventors conducted research from various angles, and as a result, found that when the surface of lithium-metal oxide, which is a positive electrode active material, is coated with an amorphous phase comprising lithium oxide and titanium oxide in the form of a mixture, side reactions between the positive electrode active material and sulfide-based solid electrolyte may be prevented due to the coating during physical contact between the positive electrode active material and sulfide-based solid electrolyte in the positive electrode, thereby completing the present invention.

Therefore, it is an object of the present invention to provide a positive electrode active material for an all-solid-state battery, a manufacturing method thereof, and a positive electrode comprising the same, which may reduce side reactions between the positive electrode active material and sulfide-based solid electrolyte.

It is also an object of the present invention to provide an all-solid-state battery comprising the positive electrode, which has excellent life characteristics and discharge capacity.

### [TECHNICAL SOLUTION]

In order to achieve the above objective,

the present invention provides a positive electrode active material for an all-solid-state battery comprising:
a core part comprising lithium-metal oxide; and
a coating part located on a surface of the core part and comprising an amorphous phase,
wherein the amorphous phase comprises lithium oxide and titanium oxide.

Additionally, the present invention provides a manufacturing method for the positive electrode active material for an all-solid-state battery of the present invention, comprising a step of mixing and heat-treating the lithium-metal oxide, a lithium oxide precursor, and a titanium oxide precursor.

Additionally, the present invention provides a positive electrode for an all-solid-state battery comprising the positive electrode active material of the present invention, a solid electrolyte, a conductive material, and a binder.

Additionally, the present invention provides an all-solid-state battery comprising the positive electrode of the present invention; a negative electrode; and a solid electrolyte layer between the positive electrode and the negative electrode.

### [EFFECTS OF THE INVENTION]

The positive electrode active material for an all-solid-state battery of the present invention may prevent side reactions between the positive electrode active material and sulfide-based solid electrolyte by including a coating part of an amorphous phase comprising lithium oxide and titanium oxide in the form of a mixture on the surface of a core part comprising a lithium-metal oxide.

Accordingly, an all-solid-state battery comprising the positive electrode active material may have improved life characteristics and discharge capacity.

### [BEST MODE FOR CARRYING OUT THE INVENTION]

Terms or words used in the present specification and claims should not be interpreted as being limited to conventional or dictionary meanings, and should be interpreted as meanings and concepts consistent with the technical idea of the present invention based on the principle that the inventor may appropriately define the concept of terms to describe his or her invention in the best way.

Terms used in the present invention are merely used to describe specific embodiments and are not intended to limit the present invention. Singular expressions include plural expressions unless the context clearly indicates otherwise. In the present disclosure, terms such as "comprise" or "have" are intended to designate that features, numbers, steps, operations, components, parts, or combinations thereof described in the specification exist, and should be understood as not excluding in advance the existence or possibility of addition of one or more other features, numbers, steps, operations, components, parts, or combinations thereof.

Hereinafter, the present invention will be described in more detail.

A positive electrode for an all-solid-state battery comprises a positive electrode active material, a solid electrolyte, a binder, a conductive material, and the like. When the solid electrolyte is a sulfide-based solid electrolyte, chemical reaction may occur even with only physical contact due to the level difference between the positive electrode active material and the sulfide-based solid electrolyte. Additionally, an all-solid-state battery comprising the positive electrode has problems such that side reactions occur in which active lithium is consumed and resistance increases due to electrochemical reactions occurring at the interface between the positive electrode active material and the sulfide-based solid electrolyte during charging and discharging.

Therefore, the present invention provides a positive electrode active material for an all-solid-state battery that may prevent the side reactions.

### Positive Electrode Active Material for All-Solid-State Battery

The present invention provides a core part comprising a lithium-metal oxide; and
a coating part located on the surface of the core part and comprising an amorphous phase;
wherein the amorphous phase comprises lithium oxide and titanium oxide, relating to a positive electrode active material for an all-solid-state battery.

The positive electrode active material of the present invention has a core-shell structure, wherein the core part comprises a lithium-metal oxide, and the coating part corresponding to the shell is an amorphous phase and may comprise lithium oxide (Li₂O) and titanium oxide (TiₓO_{y}). More specifically, the coating part is an amorphous phase and may comprise lithium oxide and titanium oxide in the form of a mixture. In one embodiment, the coating part may comprise a composition of the following Chemical Formula 1.

[Chemical Formula 1] αTiₓO_{y}-βLi₂O

In the Chemical Formula 1,
6≤α+β≤8, and 0.7≤Li/Ti≤0.9.

Additionally, the coating part is an amorphous phase and comprises lithium oxide and titanium oxide in the form of a mixture, and may additionally comprise lithium, titanium, and oxygen in a form that forms chemical bonds.

The lithium-metal oxide is a material that may intercalate and deintercalate lithium ions, and there is no particular limitation as long as it may be used as a positive electrode active material for lithium ion secondary batteries. That is, the lithium-metal oxide of the core part may be a positive electrode active material.

For example, the lithium-metal oxide may comprise lithium cobalt oxide (LiCoO₂), lithium nickel oxide (LiNiO₂), compounds substituted with one or more transition metals; compounds of Chemical Formula LiₓM_{y}O₂ (M = one or more selected from the group consisting of Co, Mn, Ni, Al, Fe, V, Zn, Cr, Ti, Ta, Mg, Mo, Zr, W, Sn, Hf, Nd, and Gd, x is 0<x≤1.5, y is 0<y≤1); lithium manganese oxides such as compounds of Chemical Formula Li₁₊ₓMn₂₋ₓO₄ (0≤x≤0.33), LiMnO₃, LiMn₂O₃, LiMnO₂; lithium copper oxide (Li₂CuO₂); vanadium oxides such as LiV₃O₈; Ni site-type lithium nickel oxides represented by Chemical Formula LiNi₁₋ₓMₓO₂ (M = Co, Mn, Al, Cu, Fe, Mg, B, or Ga; 0.01≤x≤0.3); lithium manganese composite oxides represented by Chemical Formula LiMn₂₋ₓMₓO₂ (M = Co, Ni, Fe, Cr, Zn, or Ta; 0.01≤x≤0.1) or Li₂Mn₃MO₈ (M = Fe, Co, Ni, Cu, or Zn); LiCoPO₄; or LiFePO₄; but is not limited to these alone.

The lithium-metal oxide may have a layered crystal structure and may not have a spinel structure.

As the lithium-metal oxide has a layered crystal structure, the operating voltage of an all-solid-state battery comprising the positive electrode active material may be 2.5 to 4.3V. If the lithium-metal oxide has a spinel structure, the operating voltage of an all-solid-state battery comprising the same may be raised up to 5V, but considering the capacity advantage of layered structure, the spinel structure is excluded, and it is not preferable because it is different from the range of operating voltage targeted in the present invention.

The coating part is located on the surface of the core part and may be an amorphous phase. Additionally, the amorphous phase may comprise lithium oxide and titanium oxide in the form of a mixture.

The coating may mean that amorphous phase lithium oxide and titanium oxide are physically and/or chemically bonded to the surface of the core part. Additionally, the coating part may exist in a form that uniformly covers the entire surface of the core part. When the coating part exists uniformly on the entire surface of the core part, the coating part may prevent direct contact between the lithium-metal oxide and the sulfide-based solid electrolyte to suppress side reactions due to chemical potential difference of lithium ions. Additionally, at the same time, the concentration of lithium increases to secure a movement path of lithium ions, thereby reducing interfacial resistance with the sulfide-based solid electrolyte. That is, the coating part may act as a buffer layer between the core part and the sulfide-based solid electrolyte to suppress the side reactions and reduce interfacial resistance.

If the amorphous phase comprises lithium oxide and boron oxide in the form of a mixture, an effect of improving high-rate characteristics of an all-solid-state battery comprising the positive electrode active material cannot be expected. The present invention may obtain an effect of improving high-rate characteristics of an all-solid-state battery by comprising lithium oxide and titanium oxide in the form of a mixture.

The thickness of the coating part may be 5 to 200nm, preferably 5 to 100nm, and most preferably 5 to 30nm. As the thickness of the coating part is 5 to 200nm, an effect of suppressing side reactions between the lithium-metal oxide and the sulfide-based solid electrolyte and reducing interfacial resistance may be obtained. If the thickness of the coating part is less than 5nm, the side reaction suppression and interfacial resistance reduction effect is very minimal, and if the thickness of the coating part exceeds 200nm, the original electrochemical performance of the positive electrode active material may not be exhibited due to increased interfacial resistance, so it is not preferable.

Since the coating part is an amorphous phase, it does not have diffraction peaks at 2θ=10 to 90° in X-ray diffraction analysis (XRD). A diffraction peak of titanium oxide at 25 to 27° may be observed, but since the diffraction peak of the titanium oxide has very low intensity, the coating part may exist as an amorphous phase.

When the coating part is a crystalline phase, it may be formed in an island type on the surface of the core part, which is not preferable, and a problem of reduced ionic conductivity may occur. However, when the coating part is an amorphous phase, problems occurring in the coating part may be solved. Therefore, the coating part may prevent direct contact between the lithium-metal oxide and the sulfide-based solid electrolyte to suppress side reactions due to chemical potential difference of lithium ions, and may reduce interfacial resistance with the sulfide-based solid electrolyte.

The coating part may be included in an amount of 0.1 to 5 parts by weight, preferably 0.1 to 1 part by weight, based on 100 parts by weight of the core part. Additionally, the molar ratio of lithium to titanium (Li/Ti) in the coating part may be 0.7 to 0.9. The coating part may obtain the side reaction prevention effect within the weight ratio range and molar ratio range, and if the range is exceeded, side reactions occur, increasing interfacial resistance, so there is a problem that electrochemical characteristics of an all-solid-state battery comprising the same cannot be improved.

The positive electrode active material for an all-solid-state battery may prevent damage to the core part, which is a positive electrode active material, by comprising a coating part on the surface of the core part.

Additionally, the positive electrode active material for an all-solid-state battery may implement stable electrochemical performance because the bulk structure of the core part does not change even when including a coating part on the surface of the core part. Generally, if problems occur during the process of coating the positive electrode active material that is the core part, the structure of the positive electrode active material may change. For example, the bulk structure may change to a rock salt structure, and in this case, a problem of reduced mobility of lithium in the positive electrode active material may occur, but the present invention may stably maintain the bulk structure of the positive electrode active material even when including a coating part.

### Manufacturing Method of Positive Electrode Active Material for All-Solid-State Battery

The present invention relates to a manufacturing method of a positive electrode active material for an all-solid-state battery, and may comprise a step of mixing a lithium-metal oxide, a lithium oxide precursor, and a titanium oxide precursor and heat-treating them.

The positive electrode active material for an all-solid-state battery may be the positive electrode active material for an all-solid-state battery of the present invention described above. That is, the positive electrode active material for an all-solid-state battery may comprise a core part comprising a lithium-metal oxide; and a coating part located on the surface of the core part and comprising an amorphous phase, wherein the amorphous phase may comprise lithium oxide and titanium oxide in the form of a mixture.

The lithium-metal oxide is included in the core part, and the lithium oxide precursor and the titanium oxide precursor may be raw materials forming the coating part.

The lithium-metal oxide follows the above description.

The manufacturing method may be performed by a dry process that does not use a solvent, or may be performed by a wet process in which the lithium-metal oxide, lithium oxide precursor, and titanium oxide precursor are dispersed in a solvent and then mixed.

The solvent is not particularly limited as long as it is a solvent in which the lithium-metal oxide, lithium oxide precursor, and titanium oxide precursor may be stably dispersed. For example, the solvent may be a solvent generally used in the art, and may include dimethyl sulfoxide (DMSO), isopropyl alcohol, N-methyl-2-pyrrolidone (NMP), acetone, or water, and one of these alone or a mixture of two or more thereof may be used.

The lithium oxide precursor may be lithium oxide or a compound that may be converted to lithium oxide through oxidation. The compound that may be converted to lithium oxide may include, for example, LiOH, Li₂CO₃, LiNO₃, and Li₂SO₄, but is not limited thereto.

The titanium oxide precursor may be titanium oxide or a compound that may be converted to titanium oxide through oxidation. The compound that may be converted to titanium oxide may include, for example, TiO₂, titanium ethoxide, and tetra butyl titanate, but is not limited thereto.

When formation of the coating part on the surface of the lithium-metal oxide that is the core part is completed, a process of obtaining the positive electrode active material for an all-solid-state battery and then drying to remove residual solvent may be performed. The removal of the residual solvent may be performed through a convection oven, a hot stirrer, or a vacuum evaporator. After removing the residual solvent, heat treatment may be performed.

The heat treatment may be performed in an atmosphere containing oxygen at a temperature of 200 to 600°C for 2 to 6 hours. Preferably, it may be performed at a temperature of 350 to 450°C for 2 to 4 hours. The heat treatment temperature may be a temperature at which the coating part does not form a crystalline phase and the coating part does not affect the structure of the core part. If the heat treatment temperature is less than 200°C, adhesion of the coating part to the surface of the core part may be poor, and if it exceeds 600°C, it is not preferable because the coating part has a crystalline phase.

A cooling process may be additionally included after the heat treatment.

Additionally, since the lithium oxide may also be derived from lithium-containing components present on the surface of the lithium-metal oxide of the core part, a positive electrode active material for an all-solid-state battery may also be manufactured by mixing only the lithium-metal oxide and the titanium oxide precursor and then heat-treating them.

### Positive Electrode for All-Solid-State Battery

The present invention relates to a positive electrode for an all-solid-state battery, and the positive electrode may comprise a positive electrode active material, a sulfide-based solid electrolyte, a conductive material, and a binder, wherein the positive electrode active material is the positive electrode active material of the present invention described above.

The positive electrode may comprise a positive electrode current collector and a positive electrode active material layer coated on one side or both sides of the positive electrode current collector. Therefore, the positive electrode active material, sulfide-based solid electrolyte, conductive material, and binder may be included in the positive electrode active material layer. Additionally, the positive electrode may be in a current collector free form. Accordingly, the positive electrode active material layer itself may be the positive electrode.

The positive electrode active material may be the same as the positive electrode active material of the present invention described above.

The positive electrode active material may be included in an amount of 55 to 90% by weight based on the total weight of the positive electrode active material layer. Specifically, the amount of the positive electrode active material may be 55% by weight or more, 60% by weight or more, or 65% by weight or more, and may be 83% by weight or less, 85% by weight or less, or 90% by weight or less. If the amount of the positive electrode active material is less than 55% by weight, battery performance may be deteriorated, and if it exceeds 90% by weight, mass transfer resistance may increase.

The positive electrode current collector is for supporting the positive electrode active material layer, and there is no particular limitation as long as it has excellent conductivity and is electrochemically stable in the voltage range of lithium secondary batteries. For example, the positive electrode current collector may be any one metal selected from the group consisting of copper, aluminum, stainless steel, titanium, silver, palladium, nickel, alloys thereof, and combinations thereof, and the stainless steel may be surface-treated with carbon, nickel, titanium, or silver, and aluminum-cadmium alloy may preferably be used as the alloy, and in addition, fired carbon, non-conductive polymer surface-treated with a conductive material, or conductive polymer may be used.

The positive electrode current collector may strengthen the bonding force with the positive electrode active material by forming fine irregularities on its surface, and various forms such as films, sheets, foils, meshes, nets, porous bodies, foams, and non-woven fabrics may be used.

The sulfide-based solid electrolyte contains sulfur (S) and has ionic conductivity of metals belonging to Group 1 or Group 2 of the periodic table, and may include Li-P-S-based glass or Li-P-S-based glass ceramic.

Specifically, the sulfide-based solid electrolyte may comprise one or more selected from the group consisting of Li₆PS₅Cl, Li₆PS₅Br, Li₆PS₅I, Li₂S-P₂S₃, Li₂S-LiI-P₂S₅, Li₂S-LiI-Li₂O-P₂S₅, Li₂S-LiBr-P₂S₅, Li₂S-Li₂O-P₂S₅, Li₂S-Li₃PO₄-P₂S₅, Li₂S-P₂S₅, Li₂S-P₂S₃-SiS₂, Li₂S-P₂S₅-SnS, Li₂S-P₂S₅-Al₂S₃, Li₂S-GeS₂, and Li₂S-GeS₂-ZnS, and preferably may comprise one or more selected from the group consisting of Li₆PS₅Cl, Li₆PS₅Br, and Li₆PS₅I. The Li₆PS₃Cl, Li₆PS₅Br, and Li₆PS₅I may be Argyrodite type solid electrolytes. Additionally, the sulfide-based solid electrolyte may be in a form in which trace elements are doped, and for example, may be Li₆PS₅Cl additionally doped with bromine (Br).

Additionally, the sulfide-based solid electrolyte may be included in an amount of 10 to 50% by weight based on the total weight of the positive electrode active material layer. Specifically, the amount of the sulfide-based solid electrolyte may be 10% by weight or more, 20% by weight or more, or 30% by weight or more, and may be 40% by weight or less, 45% by weight or less, or 50% by weight or less. If the amount of the sulfide-based solid electrolyte is less than 10% by weight, an ionic conductivity improvement effect may be minimal, and if it exceeds 50% by weight, the amount of the positive electrode active material, binder, or conductive material relatively decrease, so battery performance may be deteriorated.

The conductive material is not particularly limited as long as it prevents side reactions in the internal environment of an all-solid-state battery and has excellent electrical conductivity without causing chemical changes in the battery.

For example, graphite or conductive carbon may be used as the conductive material, for example, graphite such as natural graphite and artificial graphite; carbon black such as acetylene black, Ketjen black, Denka black, thermal black, channel black, furnace black, lamp black; and carbon-based materials having a crystal structure of graphene or graphite; conductive fibers such as carbon fibers and metal fibers; fluorinated carbon; metal powders such as aluminum powder and nickel powder; conductive whiskers such as zinc oxide and potassium titanate; conductive metal oxides such as titanium oxide; and conductive polymers such as polyphenylene derivatives; may be used alone or in a mixture of two or more thereof, but are not necessarily limited thereto. Preferably, the conductive material may comprise vapor-grown carbon fiber (VGCF).

The conductive material may be included in an amount of 0.1% by weight to 5% by weight based on the total weight of the positive electrode active material layer, and specifically, the amount of the conductive material may be 0.1% by weight or more, 0.5% by weight or more, 1% by weight or more, 1.5% by weight or more, or 2% by weight or more, and may be 4% by weight or less, 4.5% by weight or less, or 5% by weight or less. If the amount of the conductive material is too little at less than 0.1% by weight, it may be difficult to expect an electrical conductivity improvement effect or electrochemical characteristics of the battery may be deteriorated, and if it is too much at more than 5% by weight, the amount of positive electrode active material relatively decreases, so capacity and energy density may be deteriorated.

Additionally, the binder increases the binding force between components constituting the positive electrode and between them and the current collector, and all binders known in the art may be used.

For example, the binder may use one selected from the group consisting of: fluorine resin-based binders including polyvinylidenefluoride (PVdF) or polytetrafluoroethylene (PTFE); rubber-based binders including styrene butadiene rubber (SBR), acrylonitrile-butadiene rubber, and styrene-isoprene rubber; cellulose-based binders including carboxyl methyl cellulose (CMC), starch, hydroxypropyl cellulose, and regenerated cellulose; polyalcohol-based binders; polyolefin-based binders including polyethylene and polypropylene; polyimide-based binders; polyester-based binders; and silane-based binders, a mixture of two or more thereof, or a copolymer thereof.

Additionally, the binder may be included in an amount of 0.1 to 3% by weight based on the total weight of the positive electrode active material layer. Specifically, the amount of the binder may be 0.1% by weight or more, 0.5% by weight or more, or 0.8% by weight or more, and may be 1.5% by weight or less, 2% by weight or less, or 3% by weight or less. If the amount of the binder is less than 0.1% by weight, a binding force improvement effect between materials included in the positive electrode active material layer may be minimal, so an electrode sheet may not be properly formed, and if it exceeds 3% by weight, ionic conductivity or electrical conductivity may be deteriorated.

### All-Solid-State Battery

The present invention relates to an all-solid-state battery comprising a positive electrode; a negative electrode; and a solid electrolyte layer between the positive electrode and the negative electrode, wherein the positive electrode is the positive electrode of the present invention described above.

The negative electrode may comprise a negative electrode current collector and a negative electrode active material layer located on the negative electrode current collector. Additionally, the negative electrode may comprise a conductive material and a binder as necessary, similar to the positive electrode. At this time, the negative electrode current collector, conductive material, and binder are as described above.

The negative electrode active material may be any material that may reversibly intercalate or deintercalate lithium ions (Li⁺), or that may react with lithium ions to reversibly form lithium-containing compounds.

For example, the negative electrode active material may comprise one or more carbon-based materials selected from the group consisting of crystalline artificial graphite, crystalline natural graphite, amorphous hard carbon, low crystalline soft carbon, carbon black, acetylene black, Ketjen black, Super-P, graphene, and fibrous carbon, Si-based materials, LiₓFe₂O₃ (0≤x≤1), LiₓWO₂ (0≤x≤1), metal composite oxides such as SnₓMe₁₋ₓMe'_{y}O_{z} (Me: Mn, Fe, Pb, Ge; Me': Al, B, P, Si, Group 1, Group 2, Group 3 elements in the periodic table, halogens; 0<x≤1; 1≤y≤3; 1≤z≤8); lithium metal; lithium alloys; silicon-based alloys; tin-based alloys; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; titanium oxide; lithium titanium oxide; but is not limited thereto.

Additionally, the negative electrode may comprise a negative electrode current collector and a coating layer comprising metal-carbon composite particles located on the negative electrode current collector. This may mean an anodeless anode that does not comprise a negative electrode active material.

The negative electrode may be configured such that during charging of an all-solid-state battery, lithium ions pass through the coating layer to reach the surface of the negative electrode current collector, and they are electrodeposited to form a lithium metal layer.

The metal-carbon composite particles may have a form in which carbon particles and metal particles are attached to each other or one is coated on the surface of the other, and may be physically or chemically bonded.

The carbon particles may comprise natural graphite, artificial graphite, hard carbon, soft carbon, carbon black, acetylene black, Ketjen black, channel black, furnace black, lamp black, thermal black, carbon nanotubes, fullerene, carbon fibers, and fluorinated carbon.

The metal particles are lithiophilic metals, and for example, may include Ni, Cu, Ag, Au, Pt, Al, Zn, Bi, and the like, and may be one or a combination of two or more thereof. By introducing metals having the lithiophilic properties, it is advantageous to form a stable and uniform lithium layer on the surface of the current collector.

The negative electrode may be manufactured by mixing a binder solution and the composite particles to prepare a slurry for coating layer formation, and then applying and drying the slurry on the negative electrode current collector. At this time, the binder may be a conventional binder used in the art.

The solid electrolyte layer is formed of a solid electrolyte in a layer form, and the solid electrolyte may comprise one or more selected from the group consisting of sulfide-based solid electrolytes, polymer-based solid electrolytes, and oxide-based solid electrolytes, and preferably may comprise a sulfide-based solid electrolyte.

The sulfide-based solid electrolyte follows the above description.

The polymer-based solid electrolyte is a composite of a lithium salt and a polymer resin, that is, a polymer electrolyte material in a form formed by adding a polymer resin to a solvated lithium salt, and may exhibit ionic conductivity of about 1×10⁻⁷ S/cm or more, preferably about 1×10⁻⁵ S/cm or more.

Non-limiting examples of the polymer resin include polyether-based polymers, polycarbonate-based polymers, acrylate-based polymers, polysiloxane-based polymers, phosphazene-based polymers, polyethylene derivatives, alkylene oxide derivatives such as polyethylene oxide, phosphoric acid ester polymers, polyaziridine, polyester sulfide, polyvinyl alcohol, polyvinylidene fluoride, polymers including ionic dissociation groups, and the like, and may include one or more thereof. Additionally, the polymer electrolyte may include, as polymer resins, branched copolymers obtained by copolymerizing amorphous polymers such as PMMA, polycarbonate, polysiloxane (PDMS), and/or phosphazene as comonomers to a PEO (poly ethylene oxide) main chain, comb-like polymer resins, and crosslinked polymer resins, and one or more thereof may be included.

In the polymer solid electrolyte, the aforementioned lithium salt is an ionizable lithium salt and may be represented as Li⁺X⁻. The anion of such lithium salt is not particularly limited, but examples include F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like.

The oxide-based solid electrolyte contains oxygen (O) and may have ionic conductivity of metals belonging to Group 1 or Group 2 of the periodic table. For example, it may comprise one or more selected from LLTO-based compounds, Li₆La₂CaTa₂O₁₂, Li₆La₂ANb₂O₁₂ (A is Ca or Sr), Li₂Nd₃TeSbO₁₂, Li₃BO_{2.5}N_{0.5}, Li₉SiAlO₈, LAGP-based compounds, LATP-based compounds, Li₁₊ₓTi₂₋ₓAlₓSi_{y}(PO₄)_{3-y} (where 0≤x≤1, 0≤y≤1), LiAlₓZr₂₋ₓ(PO₄)₃ (where 0≤x≤1, 0≤y≤1), LiTiₓZr₂₋ₓ(PO₄)₃ (where 0≤x≤1, 0≤y≤1), LISICON-based compounds, LIPON-based compounds, perovskite-based compounds, NASICON-based compounds, and LLZO-based compounds.

The positive electrode active material of the present invention, as described above, comprises a coating part on the surface of a core part, and the coating part is an amorphous phase, and the amorphous phase comprises lithium oxide and titanium oxide in the form of a mixture, thereby preventing the lithium-metal oxide that is the positive electrode active material from directly contacting the sulfide-based solid electrolyte to reduce side reactions occurring between the positive electrode active material and the sulfide-based solid electrolyte, and accordingly may reduce interfacial resistance. Additionally, an all-solid-state battery comprising the positive electrode active material may obtain an effect of improving life characteristics.

### [MODE FOR CARRYING OUT THE INVENTION]

Hereinafter, the present invention will be described in more detail through examples, but the following examples are for illustrating the present invention, and the scope of the present invention is not limited to these alone.

### <Manufacturing of All-Solid-State Battery>

### Example 1

A positive electrode active material NCM811 having a layered crystal structure as a core part, a lithium oxide precursor and a titanium oxide precursor as raw materials for the coating part were dispersed in ethanol. The coating part was included in an amount of 0.5 parts by weight based on 100 parts by weight of the core part. The residual solvent of the dispersion was removed using a vacuum rotary evaporator. Thereafter, the dispersion from which the residual solvent was removed was heat-treated at a temperature of 400°C for 4 hours, cooled to room temperature, and then pulverized to manufacture a positive electrode active material for an all-solid-state battery.

The positive electrode active material comprises a core part and a coating part located on the surface of the core part, wherein the core part is NCM811, and the coating part comprises lithium oxide and titanium oxide.

Additionally, as a result of ICP analysis of the coating part of the positive electrode active material, the molar ratio of Li and Ti in the coating part of the positive electrode active material of Example 1 was observed to be 0.7 to 0.9.

Powder mixing was performed with the positive electrode active material, sulfide-based solid electrolyte particles, conductive material, and binder at a weight ratio of 80:17:2:1. Specifically, after quantifying the positive electrode active material and Li₆PS₅Cl as the sulfide-based solid electrolyte in powder form, they were mixed using a blade mixer in a dry room environment for 15 minutes to obtain a mixture. Thereafter, vapor-grown carbon fiber (VGCF) powder as a conductive material was quantified and added to the mixture and then mixed, and PTFE (Polytetrafluoroethylene) powder as a binder was quantified and additionally mixed to obtain a mixed powder.

The mixed powder was put into a mortar, fibrillation was performed in the mortar, and calendering was performed with a roller to manufacture a positive electrode with 6 mAh/cm² loading.

After sequentially stacking the positive electrode, a sulfide-based solid electrolyte membrane (Li₆PS₅Cl), and a negative electrode (lithium metal), pressurization was performed at 100 MPa to manufacture an all-solid-state battery.

### Example 2

A positive electrode active material, positive electrode, and all-solid-state battery were manufactured in the same manner as Example 1, except that the coating part was included in an amount of 0.1 parts by weight based on 100 parts by weight of the core part.

As a result of ICP analysis of the coating part of the positive electrode active material, the molar ratio of Li and Ti in the coating part of the positive electrode active material of Example 2 was observed to be 0.7 to 0.9.

### Example 3

A positive electrode active material, positive electrode, and all-solid-state battery were manufactured in the same manner as Example 1, except that the coating part was included in an amount of 5 parts by weight based on 100 parts by weight of the core part.

As a result of ICP analysis of the coating part of the positive electrode active material, the molar ratio of Li and Ti in the coating part of the positive electrode active material of Example 3 was observed to be 0.7 to 0.9.

### Example 4

A positive electrode active material, positive electrode, and all-solid-state battery were manufactured in the same manner as Example 1, except that the coating part was included in an amount of 10 parts by weight based on 100 parts by weight of the core part.

As a result of ICP analysis of the coating part of the positive electrode active material, the molar ratio of Li and Ti in the coating part of the positive electrode active material of Example 4 was observed to be 0.7 to 0.9.

### Example 5

A positive electrode active material, positive electrode, and all-solid-state battery were manufactured in the same manner as Example 1, except that the heat treatment of the dispersion from which the residual solvent was removed was performed at a temperature of 500°C.

As a result of ICP analysis of the coating part of the positive electrode active material, the molar ratio of Li and Ti in the coating part of the positive electrode active material of Example 5 was observed to be 0.7 to 0.9.

### Example 6

A positive electrode active material, positive electrode, and all-solid-state battery were manufactured in the same manner as Example 1, except that the heat treatment of the dispersion from which the residual solvent was removed was performed at a temperature of 100°C.

### Comparative Example 1

A positive electrode active material, positive electrode, and all-solid-state battery were manufactured in the same manner as Example 1, except that the heat treatment of the dispersion from which the residual solvent was removed was performed at a temperature of 700°C.

### Experimental Example 1. XRD Measurement of Coating Part of Positive Electrode Active Material for All-Solid-State Battery

The coating parts of the positive electrode active materials for all-solid-state batteries manufactured in Examples 1 to 6 and Comparative Example 1 were measured by XRD.

The XRD used the D8 Endeavor system from Bruker, and the range of 10 to 90° was measured using a Cu target.

As a result of XRD measurement, the coating parts of the positive electrode active materials of Examples 1 to 4 and 6 did not show peaks at 2θ=10 to 90°. From this, it could be confirmed that the coating parts of the positive electrode active materials of Examples 1 to 4 and 6 were amorphous phases. Since the coating parts of the positive electrode active materials of Examples 1 to 4 and 6 are amorphous phases, lithium oxide and titanium oxide may be in the form of a mixture, and may also be in the form of lithium-titanium oxide (Li-Ti-O).

The coating part of the positive electrode active material of Example 5 showed a peak of titanium oxide with very low intensity at 2θ=25 to 27°. Even though the peak was observed, since the intensity is very low, the crystallinity of the coating part is in a very low form, and it can be confirmed that the coating part exists as an amorphous phase.

On the other hand, the coating part of the positive electrode active material of Comparative Example 1 showed peaks at 2θ=18°, 36°, 48°, 57°, 64°, 67°, and 79°. Therefore, it could be confirmed that the coating part of the positive electrode active material of Comparative Example 1 was a crystalline phase. Comparative Example 1 was prepared by heat treatment at a temperature of 700°C, and it could be confirmed that the coating part has a crystalline phase due to the high heat treatment temperature.

### Experimental Example 2. Performance Evaluation of All-Solid-State Battery

Performance evaluation of the all-solid-state batteries manufactured in Examples 1 to 6 and Comparative Example 1, respectively, was performed.

After activating the all-solid-state batteries in a charge-discharge device at 0.05C for 2 cycles, rate characteristics (capacity capability) were observed through a protocol of discharging up to a maximum of 1C. Specifically, rate characteristics were observed through a protocol of 0.05C CC/CV (Constant Current/Constant Voltage) charging, 0.05C CC (Constant Current) discharging for 2 cycles, and then maintaining the 0.1C CC/CV charging process while performing CC discharging at 0.1C/0.2C/0.33C/0.5C/1C in the charge-discharge device. Additionally, life characteristics were observed through 0.33C CC-CV charging and 0.33C CC discharging, and the initial discharge capacity and coulombic efficiency (C.E) results are shown in Table 1 below.

**[Table 1]**

| | Discharge capacity (mAh/g) | C.E(%) | 1.0C/0.1C(%) | Cycle capacity (@100cycle) |
|---|---|---|---|---|
| Example 1 | 207 | 94% | 95% | 93% |
| Example 2 | 207 | 93% | 93% | 91% |
| Example 3 | 204 | 93% | 92% | 92% |
| Example 4 | 190 | 85% | 83% | 88% |
| Example 5 | 201 | 93% | 88% | 90% |
| Example 6 | 200 | 92% | 86% | 85% |
| Com. Ex. 1 | 199 | 85% | 83% | 88% |

In the results of Table 1 above, the all-solid-state batteries of Examples 1 to 3, in which the coating part of the positive electrode active material for all-solid-state battery is an amorphous phase, the coating part is included in an amount of 0.1 to 5 parts by weight based on 100 parts by weight of the core part, and the Li/Ti molar ratio of the coating part is 0.7 to 0.9, showed excellent battery performance results.

Example 4 has a coating part of the positive electrode active material for all-solid-state battery that is an amorphous phase, but the coating part is included in an amount of 10 parts by weight based on 100 parts by weight of the core part, and showed lower performance of the all-solid-state battery than Examples 1 to 3.

Example 5 has a coating part of the positive electrode active material for all-solid-state battery that is an amorphous phase, but the heat treatment temperature during positive electrode active material manufacturing was 500°C, and showed excellent results for discharge capacity, C.E, and life characteristics, but showed lower rate than Examples 1 to 3.

Example 6 has a coating part of the positive electrode active material for all-solid-state battery that is an amorphous phase, but the heat treatment temperature during positive electrode active material manufacturing was 100°C, and the bonding between the coating part and the core part was very weak, so delamination of the coating part occurred. Accordingly, it showed low rate and life characteristics results.

Comparative Example 1 has a coating part of the positive electrode active material for all-solid-state battery that is a crystalline phase, and the heat treatment temperature during positive electrode active material manufacturing was 700°C. As the coating part has a crystalline phase, the all-solid-state battery of Comparative Example 1 showed lower performance of the all-solid-state battery than Examples 1 to 3.

From this, it can be confirmed that when the coating part of the positive electrode active material for all-solid-state battery is an amorphous phase, the characteristics of the all-solid-state battery comprising the same are improved. Additionally, even if the coating part is an amorphous phase, if the bonding between the coating part and the core part is weak, delamination of the coating part occurs and the characteristics of the all-solid-state battery cannot be improved, and it can be confirmed that when the coating part is included in an amount of 0.1 to 5 parts by weight based on 100 parts by weight of the core part, the characteristics of the all-solid-state battery can be further improved.

## Claims

1. A positive electrode active material for an all-solid-state battery comprising:
a core part comprising lithium-metal oxide; and
a coating part located on a surface of the core part and comprising an amorphous phase,
wherein the amorphous phase comprises lithium oxide and titanium oxide.

2. The positive electrode active material for an all-solid-state battery according to claim 1,
wherein the amorphous phase comprises lithium oxide and titanium oxide in a form of a mixture.

3. The positive electrode active material for an all-solid-state battery according to claim 2,
wherein the amorphous phase comprises a composition of the following Chemical Formula 1:
[Chemical Formula 1] αTiₓO_{y}-βLi₂O
wherein in Chemical Formula 1,
6≤α+β≤8, and 0.7≤Li/Ti≤0.9.

4. The positive electrode active material for an all-solid-state battery according to claim 1,
wherein in the coating part, a molar ratio of lithium to titanium (Li/Ti) is 0.7 to 0.9.

5. The positive electrode active material for an all-solid-state battery according to claim 1,
wherein the amorphous phase does not have diffraction peaks at 10 to 90° in X-ray diffraction analysis.

6. The positive electrode active material for an all-solid-state battery according to claim 1,
wherein the lithium-metal oxide has a layered crystal structure.

7. The positive electrode active material for an all-solid-state battery according to claim 1,
wherein a thickness of the coating part is 5 to 200nm.

8. The positive electrode active material for an all-solid-state battery according to claim 1,
wherein the coating part is included in an amount of 0.1 to 5 parts by weight based on 100 parts by weight of the core part.

9. A manufacturing method for the positive electrode active material for an all-solid-state battery of claim 1, comprising mixing and heat-treating the lithium-metal oxide, a lithium oxide precursor, and a titanium oxide precursor.

10. The manufacturing method for the positive electrode active material for an all-solid-state battery according to claim 9,
wherein the heat-treating is performed at a temperature of 200 to 600°C for 2 to 4 hours.

11. A positive electrode for an all-solid-state battery comprising the positive electrode active material of claim 1, a sulfide-based solid electrolyte, a conductive material, and a binder.

12. An all-solid-state battery comprising the positive electrode of claim 11; a negative electrode; and a solid electrolyte layer between the positive electrode and the negative electrode.

13. The all-solid-state battery according to claim 12,
wherein the solid electrolyte layer comprises one or more electrolytes selected from the group consisting of a sulfide-based solid electrolyte, a polymer-based solid electrolyte, and an oxide-based solid electrolyte.

14. The all-solid-state battery according to claim 12,
wherein an operating voltage of the all-solid-state battery is 3 to 4.5V.
